## Europäisches Patentamt

## European Patent Office

## Office européen des brevets

(11) Numéro de publication: **0 319 404**
**A1**

# (12) DEMANDE DE BREVET EUROPEEN

(21) Numéro de dépôt: **88403010.7**

(22) Date de dépôt: **30.11.88**

(51) Int. Cl.⁴: **H 02 P 1/44**

(30) Priorité: **02.12.87 FR 8717100**

(43) Date de publication de la demande:
**07.06.89 Bulletin 89/23**

(84) Etats contractants désignés: **ES GB IT**

(71) Demandeur: **SGS-THOMSON MICROELECTRONICS S.A.**
**7, Avenue Galliéni**
**F-94250 Gentilly (FR)**

(72) Inventeur: **Aubin, Philippe**
**32, Résidence Beaumer**
**F-37260 Monts (FR)**

(74) Mandataire: **de Beaumont, Michel et al**
**1bis, rue Champollion**
**F-38000 Grenoble (FR)**

(54) **Circuit de commande électronique de démarrage d'un moteur asynchrone.**

(57) L'invention concerne un circuit de commande de moteur électrique, plus particulièrement de moteur asynchrone monophasé à rotor en court-circuit.

Pour permettre de connecter en parallèle sur le moteur une capacité de démarrage (Cd) pendant une durée limitée, on utilise selon l'invention un triac (TR1) en série avec la capacité, avec un circuit (DCL) de déclenchement pour mettre en conduction le triac à la mise sous tension du moteur et pendant une phase de démarrage, des moyens (SFD, TH1) pour interrompre la conduction du triac à la fin de cette phase (soit au bout d'une durée déterminée, soit lorsque le moteur a atteint une certaine vitesse), et des moyens (AL, Ra) pour interdire la remise en conduction du triac après la fin de la phase de démarrage tant que le moteur reste sous tension. Ces moyens d'interdiction sont constitués de préférence par un thyristor (TH1) alimenté par un courant continu qui est présent tant que le moteur est alimenté, de sorte qu'une fois que le thyristor a été rendu conducteur pour bloquer le triac, il ne peut plus être bloqué tant que le moteur reste alimenté.

Ce circuit à l'avantage de protéger le condensateur de démarrage et le moteur lorsque le moteur se bloque en pleine charge.

Fig 1

**Description**

## CIRCUIT DE COMMANDE ÉLECTRONIQUE DE DÉMARRAGE D'UN MOTEUR ASYNCHRONE

Certains moteurs électriques, et plus particulièrement les moteurs asynchrones monophasés à rotor en court-circuit, fonctionnent avec des enroulements de stator dans lesquels le déphasage des courants entre enroulements est assuré simplement par la mise en série d'une capacité avec l'un des enroulements.

Ces moteurs présentent de nombreuses qualités, mais ont notamment comme inconvénient leur faible couple au démarrage.

Pour améliorer ce couple il est nécessaire d'augmenter la capacité placée en série avec un enroulement. Pour cela on place une deuxième capacité en parallèle avec la capacité présente en régime permanent, mais on ne la connecte que pendant la phase de démarrage.

Jusqu'à maintenant on utilisait des relais pour connecter temporairement la capacité de démarrage en parallèle sur la capacité permanente.

Par exemple, on a utilisé un coupleur centrifuge entraîné en rotation par le moteur, ce coupleur fermant un contact pour de faibles vitesses de rotation du moteur et ouvrant ce contact dès que la vitesse dépasse un seuil déterminé.

On a aussi utilisé des relais à commande par tension, connectés aux bornes de l'enroulement de stator, ces relais étant sensibles à la brusque chute de tension aux bornes de l'enroulement au moment de la mise sous tension.

On a également proposé des relais sensibles au courant, qui détectent le fort appel de courant au démarrage et qui mettent alors le condensateur de démarrage en service jusqu'à disparition de cet appel de courant.

Ces différents types de dispositifs ont de nombreux inconvénients, parmi lesquels le plus notable est leur peu de résistance à des démarrages fréquents du moteur : les contacts des relais s'usent très rapidement compte-tenu des tensions et courants qu'ils doivent supporter au moment de la commutation.

De plus, en cas de surchage excessive du moteur et en cas de blocage de celui-ci en pleine charge, le condensateur est remis en service dans des conditions où il ne devrait pas l'être et pour lesquelles il est de toute façon très infuffisament dimensionné. Le courant qui parcourt alors le condensateur est tel que celui-ci arrive à éclater.

La présente invention cherche à éliminer ces inconvénients.

Selon l'invention, on propose d'utiliser comme commutateur de mise en service du condensateur de démarrage un triac commandé par un circuit de déclenchement pour mettre en conduction le triac au moment de la mise sous tension du moteur et pendant une phase de démarrage, avec en outre des moyens pour interrompre la conduction à la fin de cette phase, et des moyens pour interdire la remise en conduction du triac si, après la fin de cette phase, le moteur n'a pas cessé d'être alimenté.

Les moyens pour interrompre la conduction du triac comprennent notamment un thyristor dont le déclenchement est commandé par la fin de la phase de démarrage ; dans la pratique, la fin de cette période est définie par le fait que le moteur a atteint une vitesse prédéterminée (que l'on peut repérer par une détection de la tension crête aux bornes d'un enroulement du moteur) ; la fin de la période de démarrage peut aussi être définie par la fin d'une durée prédéterminée à partir de la mise sous tension.

D'une manière astucieuse, on fait ici profit du fait (généralement considéré comme un inconvénient) que les thyristors sont des composants difficiles à bloquer après qu'ils ont été rendus conducteurs. Les moyens pour interdire la remise en conduction du triac après la fin de la période de démarrage sont ici constitués par un circuit d'alimentation du thyristor, qui fournit à celui-ci un courant continu d'alimentation tant que le moteur est alimenté, de sorte que le thyristor ne peut être bloqué que par suppression de l'alimentation du moteur.

Pratiquement, à partir de la fin de la phase de démarrage, le thyristor court-circuite le circuit de déclenchement ou une partie du circuit de déclenchement de la conduction du triac, et le triac ne peut plus être rendu conducteur tant que le moteur reste alimenté.

Dans une réalisation particulière, le circuit ue déclenchement comprend un optocoupleur alimenté par une tension continue prélevée aux bornes d'un enroulement du moteur ; le passage d'un courant à travers cet optocoupleur autorise la mise en conduction du triac ; le thyristor permet de court-circuiter cet optocoupleur de manière à interdire la mise en conduction du triac.

Le thyristor est alimenté par une tension continue qui peut être la même que celle qui alimente l'optocoupleur. Le thyristor est mis en conduction par un signal de fin de phase de démarrage ; ce signal est produit en réponse à la détection du dépassement d'une vitesse de rotation et/ou d'une durée déterminées. Un circuit de détection de dépassement est donc prévu à cet effet.

Outre un optocoupleur, le circuit de déclenchement de la conduction du triac comporte de préférence un circuit d'interdic tion de remise en conduction du triac lorsqu'une tension supérieure à un seuil prédéterminé est présente aux bornes du triac. Ce seuil peut être par exemple d'une trentaine de volts.

Enfin, on a constaté selon l'invention qu'immédiatement après la fin de la phase de démarrage, le triac (qui vient de se bloquer) risquait d'avoir à supporter non seulement les tensions crêtes d'alimentation des enroulements du moteur, mais aussi des surtensions importantes dues notamment au fait que la capacité de démarrage est chargée au maximum au moment du blocage du triac : lors de la demi-alternance de courant alternatif qui suit le blocage du triac, la tension aux bornes de la capacité vient s'ajouter à la tension crête d'alimentation du triac, ce qui revient pratiquement à doubler cette tension crête et ce qui oblige à dimensionner le triac très largement en conséquence.

Selon l'invention, on prévoit en parallèle sur la capacité de démarrage un circuit de décharge rapide de cette capacité, ce circuit effectuant la décharge de la capacité en réponse à la détection aux bornes du triac d'une tension supérieure à un deuxième seuil déterminé, supérieur à la tension crête d'alimentation de l'enroulement auquel est connecté la capacité de démarrage ; le seuil est par exemple de 500 volts environ pour une alimentation monophasée en 220 volts efficaces (380 volts crête).

D'autres caractéristiques et avantages de l'invention apparaîtront à la lecture de la description détaillée qui suit et qui est faite en référence aux dessins annexés dans lesquels :

la figure 1 représente un schéma-bloc du circuit de commande selon l'invention ;

la figure 2 représente ce circuit avec le détail d'un mode de réalisation du circuit de détection de la fin de la phase de démarrage ;

la figure 3 représente le circuit de commande avec le détail d'un mode de réalisation du circuit de déclenchement du triac ; et

la figure 4 représente un mode de réalisation du circuit de décharge de la capacité de démarrage.

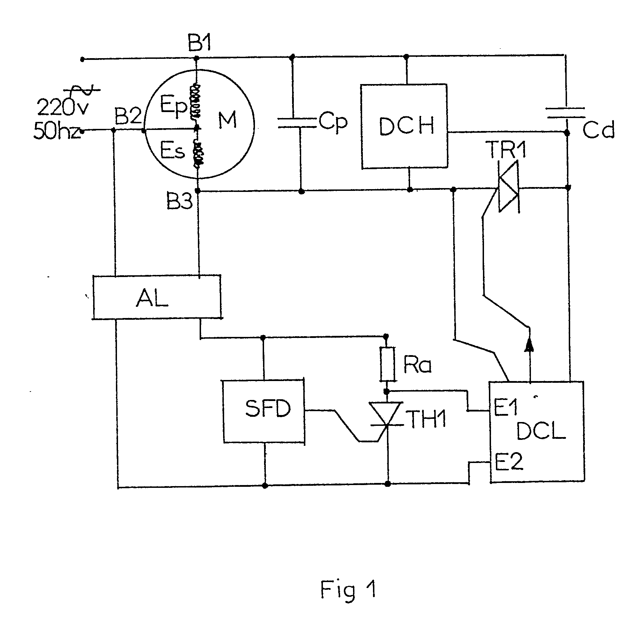

Sur la figure 1, on a représenté schématiquement un moteur électrique M, de préférence un moteur asynchrone monophasé à rotor en court-circuit, alimenté par une tension alternative monophasée qui est par exemple à 50 Hz et 220 volts efficaces.

Le moteur comporte par exemple deux enroulements de stator, respectivement un enroulement primaire Ep et un enroulement secondaire Es.

Le moteur possède trois bornes de connexion, B1, B2, B3, l'enroulement primaire Ep étant connecté entre les bornes B1 et B2 et l'enroulement secondaire Es entre les bornes B2 et B3. La tension alternative monophasée est appliquée entre les bornes B1 et B2, c'est-à-dire aux bornes de l'enroulement primaire Ep.

Un condensateur Cp est connecté en permanence entre les bornes B1 et B3, ce qui signifie que la tension alternative monophasée alimente l'ensemble en série de l'enroulement secondaire et du condensateur Cp. Ce condensateur a pour rôle de déphaser le courant qui circule dans l'enroulement secondaire Es par rapport au courant dans l'enroulement primaire Ep.

Le condensateur Cp est dimensionné de manière à effectuer le déphasage désiré en régime permanent, c'est-à-dire lorsque le moteur tourne avec une vitesse et une charge nominales.

Mais alors, au démarrage du moteur, le couple d'entraînement est trop faible.

On essaie donc de connecter temporairement, pendant une phase de démarrage, un condensateur Cd dit "condensateur de démarrage", qui est mis en parallèle avec le condensateur permanent Cp pour augmenter ce couple. A la fin de cette phase de démarrage, le condensateur de démarrage est déconnecté.

Selon l'invention, on effectue la connexion du condensateur de démarrage à l'aide d'un triac TR1 d'une manière qui va être décrite d'abord globalement en référence à la figure 1, puis dans le détail d'un mode de réalisation particulier, en référence aux figures suivantes.

Le triac TR1 est placé en série avec le condensateur de démarrage Cd, l'ensemble en série étant placé en parallèle avec le condensateur de régime permanent Cp. Lorsque le triac est rendu conducteur par un signal de commande approprié appliqué à sa gâchette, les condensateurs Cp et Cd sont connectés directement en parallèle et la capacité globale en série avec l'enroulement secondaire Es est la somme des capacités des deux condensateurs. Lorsque le trac est bloqué, on peut considérer le condensateur Cd comme déconnecté et la capacité en série avec l'enroulement secondaire Es est celle du condensateur Cp.

Le signal de commande de mise en conduction du triac TR1 est fourni par un circuit de déclenchement DCL. Ce signal doit être fourni pendant la phase de démarrage ; il doit être inhibé ensuite quand le moteur est en régime permanent, et on prévoit selon l'invention que cette inhibition persiste alors tant que le moteur reste alimenté par la tension alternative monophasée, et ceci même si le moteur doit supporter une charge excessive (c'est-à-dire un couple résistant excessif), et même s'il s'arrête complètement.

En effet, si le moteur s'arrête par suite d'une résistance trop forte alors qu'il est alimenté, le condensateur de démarrage risque, s'il est remis en service à ce moment, d'être parcouru par un courant beaucoup trop important et pendant une durée pouvant être longue. Ce condensateur n'est pas dimensionné pour ce courant et cette durée et il peut éclater.

Pour interrompre la conduction du triac TR1 à la fin de la phase de démarrage, on prévoit selon l'invention un thyristor TH1 connecté en parallèle entre deux bornes, E1 et E2 du circuit de déclenchement DCL pour inhiber celui-ci et par conséquent empêcher la production d'un courant vers la gâchette du triac TR1. L'inhibition se produit par mise en conduction du thyristor TH1 qui court-circuite alors les bornes E1 et E2. On verra plus loin comment cette mise en court-circuit permet d'inhiber le déclenchement du triac TR1.

La mise en conduction du thyristor TH1 doit avoir lieu à la fin de la phase de démarrage. La fin de cette phase peut être définie comme l'instant auquel le moteur atteint puis dépasse une vitesse prédéterminée, et dans ce cas il faut évaluer la vitesse du moteur et la comparer à la vitesse prédéterminée.

La phase de démarrage peut aussi être une phase de durée fixe, et dans ce cas il faut évaluer le temps qui s'écoule à partir de la mise sous tension du moteur et le comparer avec la durée prédéterminée pour engendrer un signal de fin de phase de démarrage à la fin de cette durée.

C'est le rôle du circuit SFD de la figure 1 que d'établir un signal de fin de phase de démarrage en fonction d'un critère de vitesse ou de durée, ou des deux à la fois, ou d'autres critères encore. Dans l'exemple de réalisation préféré qui sera décrit en détail plus loin, le signal de fin de phase de démarrage est engendré lorsque la vitesse du moteur atteint une valeur prédéterminée ou lorsqu'une durée prédéterminée s'est écoulée depuis la mise sous tension du moteur, le critère réalisé en premier provoquant l'émission d'un signal de fin de phase de démarrage et par suite une mise en conduction du thyristor TH1 pour bloquer le triac TR1.

Pour empêcher toute remise en conduction du triac TR1 après la fin de la phase de démarrage tant que le moteur reste alimenté par la tension alternative monophasée, on prévoit que le thyristor TH1 est alimenté par un courant continu et que ce courant continu est produit à partir de la tension d'alimentation du moteur.

Ainsi, on profite du fait qu'un thyristor parcouru par un courant continu ne peut pas être bloqué à partir de la gâchette. Autrement dit, si le moteur s'arrête brusquement alors qu'il est normalement alimenté, le circuit SFD va avoir tendance à considérer qu'on est présence d'une nouvelle phase de démarrage et qu'il y a lieu de bloquer le thyristor TH1 pour remettre en service la capacité de démarrage Cd. Au contraire, selon l'invention, le thyristor TH1 reste parcouru par un courant continu ; il reste conducteur bien que le circuit SFD lui coupe son courant de gâchette ; le circuit de déclenchement DCL reste inhibé, et le triac TR1 reste bloqué, empêchant une remise en circuit du condensateur de démarrage qui serait très dangereuse à ce moment par suite de l'absence de force contre-électromotrice dans l'enroulement secondaire Es.

Pour créer un courant continu dans le thyristor TH1, on prévoit un circuit d'alimentation AL connecté entre deux bornes du moteur, par exemple entre les bornes B2 et B3, c'est-à-dire aux bornes de l'enroulement secondaire Es, le circuit d'alimentation AL fournissant un courant continu au thyristor TH1 par l'intermédiaire u'une résistance Ra.

Le circuit d'alimentation AL peut servir aussi, comme c'est le cas dans l'exemple décrit, à fournir une tension d'alimentation au circuit SFD, et également à l'entrée du circuit de déclenchement DCL.

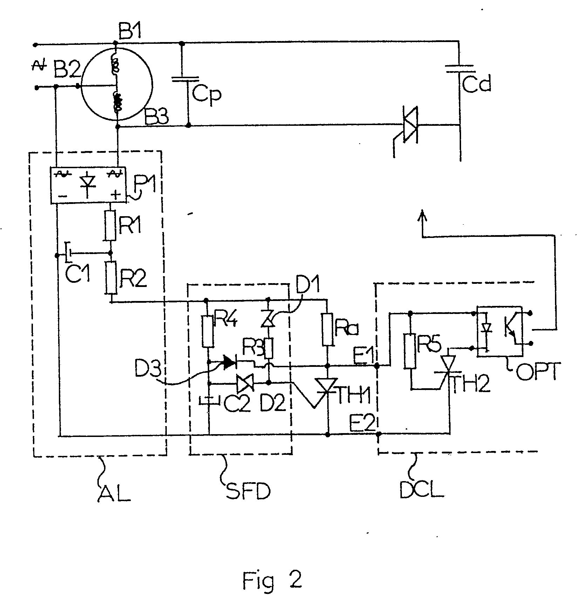

Comme on le verra dans la description de la figure 2, le circuit AL sert aussi en quelque sorte de capteur de vitesse du moteur, en ce sens que la tension continue qu'il fournit varie en fonction de la vitesse du moteur. La tension continue appliquée au circuit SFD participe donc directement à l'élaboration du signal de fin de phase de démarrage établi par ce circuit.

Pour terminer la description du schéma-bloc de la figure 1, il faut encore préciser qu'on prévoit selon l'invention un circuit DCH qui est un circuit de décharge rapide de la capacité de démarrage Cd. Ce circuit a pour fonction de décharger rapidement la capacité Cd après que le triac TR1 a été bloqué à la suite de l'interruption du courant de gâchette fourni par le circuit de déclenchement DCL.

Cette décharge doit se faire pendant le début de la demi-alternance de tension alternative qui suit le blocage du triac, pour éviter que ce dernier ne soit soumis, à la fin de cette demi-alternance, à une tension double de la tension crête d'alimentation du moteur.

En effet, en admettant que la tension crête soit de 380 volts et la période de 50 Hertz, le triac se bloque au moment où le courant qui le traverse s'annule ; à ce moment là la tension aux bornes du condensateur Cd est maximale et égale à 380 volts. Si le condensateur Cd reste chargé, il conserve cette tension à ses bornes. Au contraire, le condensateur de régime permanent reste alimenté en courant alternatif Cp voit sa tension s'inverser et passer à - 380 volts au bout d'une demi-alternance (10 millisecondes en 50 Hz). Le triac a alors 760 volts entre ses bornes.

Selon l'invention, on prévoit donc un circuit DCH apte à décharger le condensateur Cd dès que la tension aux bornes du triac dépasse un seuil prédéterminé, la décharge étant effectuée en une durée brève devant la demi-période de la tension d'alimentation monophasée. Le seuil de tension est par exemple légèrement supérieur à la tension crête d'alimentation alternative. Pour une tension crête de 380 volts, il peut être de 500 volts par exemple.

A la figure 2, on a précisé un mode de réalisation préféré du circuit SFD de production d'un signal de fin de phase de démarrage et du circuit d'alimentation AL. Sur cette figure 2, on voit en outre quels éléments du circuit de déclenchement DCL sont court-circuités par le thyristor TH1 à la fin de la phase de démarrage.

Le circuit d'alimentation AL est constitué principalement d'un pont redresseur P1, connecté par exemple entre les bornes B2 et B3, et d'un circuit de filtrage à une résistance R1 et une capacité C1. L'ensemble en série de la résistance R1 et la capacité C1 est placé aux bornes de sortie du pont redresseur P1. Le point de raccordement entre R1 et C1 est relié à une extrémité d'une résistance R2 servant à faire chuter la tension continue présente aux bornes de la capacité C1. La sortie du circuit d'alimentation AL est prise aux bornes de l'ensemble en série de la résistance R2 et de la capacité C1.

La sortie du circuit AL sert de signal d'entrée en même temps que de tension d'alimentation au circuit SFD qui doit établir le signal de fin de phase de démarrage. Par ailleurs, la sortie du circuit d'alimentation AL fournit à travers une résistance Ra, un courant continu au thyristor TH1. Ce courant ne parcourt effectivement le thyristor TH1 que si celui-ci a été rendu conducteur mais, une fois qu'il a été rendu conducteur, il ne peut plus être bloqué que par disparition du courant qui le traverse. Avec le montage adopté, cette disparition ne peut avoir lieu que lorsque le moteur ne reçoit plus de tension d'alimentation.

La tension d'alimentation reçue par le circuit SFD représente une mesure de la vitesse de rotation du moteur. Un ensemble en série d'une résistance R3 et d'une diode de Zener D1 est connecté entre la gâchette du thyristor TH1 et la sortie du circuit d'alimentation AL pour fournir un courant de déclenchement à la gâchette du thyristor dès que la tension d'alimentation (donc la vitesse) dépasse un seuil déterminé défini par la tension de seuil de la diode Zener D1 et le rapport des résistances R2 et R3. La fin de la phase de démarrage est donc dans ce cas définie par le fait que le moteur a atteint une vitesse de rotation prédéterminée.

Mais la fin de la phase de démarrage peut survenir aussi au bout d'une durée déterminée à partir de la mise sous tension du moteur si au bout de cette durée (par exemple 2 secondes) le moteur n'a pas atteint cette vitesse.

Cette durée est définie par la charge d'une capacité C2 à travers une résistance R4 connectée à la sortie du circuit d'alimentation AL. Lorsque la tension aux bornes de la capacité atteint une certaine valeur, un diac D2, connecté entre la gâchette du thyristor TH1 et le point de raccordement de la résistance R4 et de la capacité C2, fournit un courant d'amorçage à la gâchette du thyristor.

Le circuit SFD fournit donc dans ce cas un signal en réponse soit à une vitesse soit à une durée.

Une diode D3 reliant la capacité C2 à l'anode du thyristor TH1 permet de décharger la capacité C2 après la production du signal de fin de phase de démarrage.

Le thyristor TH1 est connecté en parallèle entre les bornes d'entrée E1 et E2 du circuit de déclenchement DCL.

Entre les bornes E1, et E2, le circuit DCL comprend un ensemble en série d'un photocoupleur (du côté de la partie émissive de celui-ci) et d'un deuxième thyristor TH2.

Cet ensemble en série est alimenté par le circuit d'alimentation AL à travers la résistance Ra, de sorte que le photocoupleur reçoit un courant continu d'entrée (et autorise en conséquence le passage d'un courant entre ses bornes de sortie) si le thyristor TH2 est conducteur.

La gâchette du thyristor TH2 est reliée à la résistance Ra à travers une résistance R5 de sorte que le thyristor TH2 est effectivement conducteur à partir de la mise sous tension du moteur.

A la fin de la phase de démarrage, le thyristor TH1 court-circuite l'ensemble en série du thyristor TH2 et du photocoupleur, supprimant à la fois le courant de gâchette du thyristor TH2 et son courant anode/cathode ; le thyristor TH2 se bloque, interdisant le passage d'un courant dans l'entrée du photocoupleur OPT et par conséquent aussi dans sa sortie. Cette interdiction subsiste tant que le thyristor TH1 reste conducteur donc jusqu'à la mise hors tension du moteur.

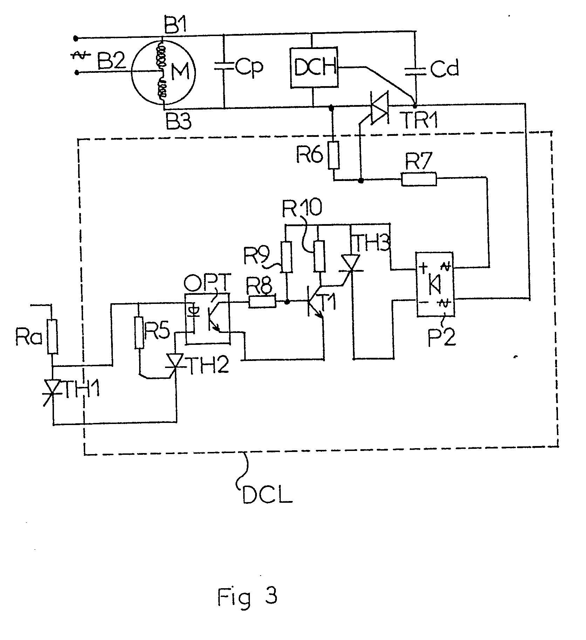

La figure 3 représente le détail du circuit de déclenchement DCL d'un mode de réalisation particulier de l'invention.

Ce circuit comprend un pont diviseur constitué de deux résistances R6 et R7 en série avec les bornes d'entrée d'un pont redresseur P2 ; cet ensemble de R6, R7 et P2 en série est placé en parallèle entre les bornes principales du triac TR1, tandis que la gâchette est reliée au point milieu du pont diviseur R6, R7. Les bornes de sortie du pont redresseur P2 alimentent un circuit comprenant un transistor T1, un thyristor TH3, trois résistances R8, R9, R10, et enfin la sortie du photocoupleur OPT. Si ce circuit consomme un courant suffisant, le triac pourra se déclencher ; s'il ne consomme pas assez de courant, le triac ne pourra pas se déclencher.

Le circuit DCL a pour fonction d'autoriser le déclenchement pendant la phase de démarrage seulement, mais seulement à condition que la tension aux bornes du triac soit inférieure à un seuil choisi, par exemple de 30 volts.

Cette limitation a pour but d'éviter les gradients de courant trop importants au moment de l'amorçage. Le gradient est en effet d'autant plus fort que la tension aux bornes du triac est plus élevée et cette tension oscille par exemple entre -380 et +380 volts pour une tension alternative à 220 volts efficaces.

Le circuit fonctionne de la manière suivante : au moment où le photocoupleur devient conducteur, le transistor T1 se bloque ou se met à conduire selon la tension entre ses bornes de base et d'émetteur. Cette tension est définie en fonction de la tension aux bornes du pont diviseur R8, R9. Si on est au début d'une alternance de tension positive ou négative aux bornes du triac, la tension aux bornes du pont diviseur R8, R9 est faible et le transistor T1 reste bloqué, autorisant la mise en conduction du thyristor TH3, donc le passage d'un courant de gâchette important vers le triac TR1 à travers le pont redresseur P2. Si au contraire on est au milieu ou au sommet d'une alternance de tension aux bornes du triac au moment où le photocoupleur se met à conduire, la tension aux bornes du pont redresseur R8, R9 est telle que le tran sistor T1 devient conducteur, empêchant le passage d'un courant de la résistance R10 vers la gâchette du thyristor TH3 ; le triac TR1 ne reçoit pas de courant de gâchette et il reste bloqué jusqu'à la fin de la demi-alternance de tension en cours. Puis il se déclenche.

Enfin, lorsque le photocoupleur est bloqué à la fin de la phase de démarrage, le transistor T1 reste conducteur pendant toute la durée des alternances positives et négatives de la tension aux bornes du triac, et il empêche l'amorçage du thyristor TH3, donc du triac TR1.

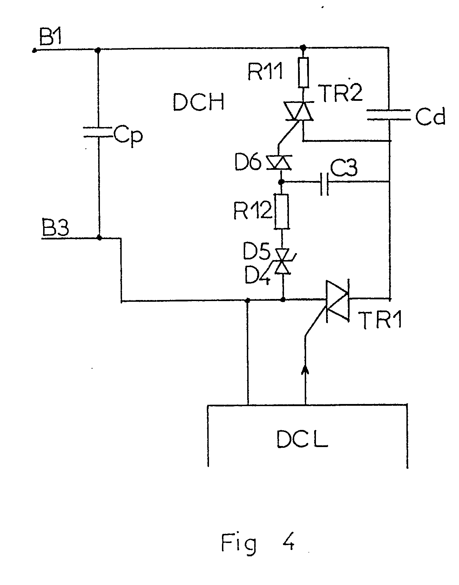

La figure 4 décrit enfin un exemple de réalisation du circuit de décharge DCH de la capacité de démarrage Cd, évitant l'apparition aux bornes du triac TR1 d'une surtension égale au double de la tension d'alimentation au moment du blocage du triac.

Ce circuit de décharge comprend un triac TR2 en série avec une résistance R11 de limitation du courant de décharge, cet ensemble en série étant placé en parallèle avec la capacité de démarrage Cd.

La gâchette du triac TR2 est reliée à un circuit de détection de la tension aux bornes du triac TR1. Ce circuit de détection comprend deux diodes Zener en série tête-bêche D4, D5, en série avec une résistance R12 et une capacité C3, l'ensemble de ces quatre éléments étant placé en parallèle sur le triac. L'ensemble D4, D5 peut être une diode Zener bidirectionnelle.

La sortie du circuit de détection est le point de raccordement de la capacité C3 et la résistance R12. Cette sortie est reliée par l'intermédiaire d'un diac D6 à la gâchette du triac TR2.

Dès que la tension aux bornes du triac TR1 dépasse le seuil de conduction des diodes D4, D5, par exemple 500 volts, la capacité C3 se charge à travers ces diodes et la résistance R12. Lorsque la tension aux bornes de la capacité C3 dépasse le seuil de mise en conduction du diac D6, par exemple 30 volts, la capacité C3 se décharge dans la gâchette du triac et le rend conducteur, déchargeant ainsi la capacité de démarrage Cd à travers la résistance R11.

La valeur des constantes de temps C3-R12 et Cd-R11 est choisie suffisamment faible pour que la décharge ait lieu en un temps bref devant la période de la tension alternative d'alimentation du moteur. Par exemple, la décharge de la capacité Cd est terminée en une durée de l'ordre de la milliseconde.

## Revendications

1. Circuit de commande de moteur électrique, destiné à connecter une capacité de démarrage (Cd) à un enroulement (Es) du moteur au moment du démarrage et à la déconnecter après le démarrage, ce circuit comportant un premier triac (TR1) en série avec la capacité (Cd), un circuit (DCL) de déclenchement du triac pour mettre le triac en conduction à la mise sous tension du moteur et pendant une phase de démarrage, des moyens (SFD, TH1) pour interrompre la conduction à la fin de cette phase, et étant caractérisé en ce qu'il comprend en outre des moyens (AL, Ra) pour interdire la remise en conduction du triac après la fin de la phase de démarrage tant que le moteur n'a pas cessé d'être alimenté.

2. Circuit de commande selon la revendication 1, caractérisé en ce que les moyens pour interrompre la conduction du triac comprennent un thyristor (TH1) dont le déclenchement est commandé par un signal de fin de phase de démarrage.

3. Circuit de commande selon la revendication 2, caractérisé en ce qu'il comporte un circuit (SFD) de détection d'un seuil de dépassement de vitesse pour fournir un signal de fin de phase de démarrage lorsque la vitesse du moteur dépasse un seuil terminé.

4. Circuit de commande selon l'une des revendications 2 et 3, caractérisé en ce qu'il comporte un circuit (SFD) de détection d'un seuil de dépassement de durée, pour fournir un signal de fin de phase de démarrage si une durée supérieure à une valeur déterminée s'est écoulée depuis la mise sous tension du moteur.

5. Circuit de commande selon l'une quelconque des revendications 2 à 4, caractérisé en ce que les moyens pour interdire la remise en conduction du triac comprennent un circuit (AL, Ra) d'alimentation du thyristor, fournissant à celui-ci un courant continu tant que le moteur est alimenté.

6. Circuit de commande selon l'une quelconque des revendications 2 à 5, caractérisé en ce que le thyristor (TH1) est connecté en parallèle sur une partie du circuit de déclenchement pour la court-circuiter lorsque le thyristor est rendu conducteur et pour interdire ainsi le déclenchement du triac.

7. Circuit de commande selon la revendication 6, caractérisé en ce que le circuit de déclenchement (DCL) comprend un optocoupleur (OPT) dont la partie émissive est alimentée par une tension continue, le passage d'un courant à travers cet optocoupleur autorisant la mise en conduction du triac, et en ce que le thyristor (TH1) est monté de manière à pouvoir court-circuiter l'optocoupleur.

8. Circuit de commande selon la revendication 7, caractérisé en ce qu'il comporte un deuxième thyristor (TH2) monté en série avec la partie émissive de l'optocoupleur, le premier thyristor (TH1) étant monté en parallèle sur cet ensemble en série, et des moyens (R5) pour déclencher la conduction de ce deuxième thyristor à la mise sous tension du moteur, ces moyens étant également court-circuités par le premier thyristor lorsqu'il est rendu conducteur.

9. Circuit de commande selon l'une quelconque des revendications 1 à 8, caractérisé en ce qu'il comporte un circuit (DCH) de décharge de la capacité de démarrage, ce circuit étant commandé à partir de la tension aux bornes du triac, pour décharger la capacité de démarrage si cette tension excède un seuil déterminé.

10. Circuit de commande selon la revendication 9, caractérisé en ce que le circuit de décharge de la capacité comprend un deuxième triac (TR2) en parallèle sur la capacité, le deuxième triac comportant une gâchette de commande reliée à un circuit (D4, D5, R12, C3) de détection d'un seuil de tension, ce circuit étant connecté aux bornes du premier triac et autorisant l'établissement d'un courant de gâchette dans le premier triac lorsque la tension aux bornes du premier triac excède ledit seuil déterminé.

EP 0 319 404 A1

Fig 1

Fig 2

Fig 3

EP 0 319 404 A1

Fig 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 031 688  (MYSON GROUP LTD) <br> * En entier * | 1 | H 02 P   1/44 |
| A |  | 2,3 | |
| A | GB-A-2 107 139  (ASEA A/S) <br> * Figures 2,3; résumé * <br> --- | | |
| A | US-A-3 819 995  (G.C. BALLMAN) <br> --- | | |
| A | DE-A-1 810 885  (KIENZLE APPARATE GmbH) <br> ----- | | |

| DOMAINES TECHNIQUES RECHERCHES (Int. Cl.4) |
|---|
| H 02 P   1/00 |

Le présent rapport a été établi pour toutes les revendications

| Lieu de la recherche | Date d'achèvement de la recherche | Examinateur |
|---|---|---|
| LA HAYE | 22-02-1989 | BEYER F. |

EPO FORM 1503 03.82 (P0402)